# EUROPEAN PATENT APPLICATION

(11) **EP 4 620 543 A1**
(43) Date of publication of application: **24.09.2025**
(21) Application number: 22965461.1
(22) Date of filing: 16.11.2022
(51) Int. Cl.: A63F 13/497, A63F 13/70, H04N 21/845, H04N 21/432, A63F 13/79

(54) **GAME MULTIMEDIA DATA AUTHENTICATION AND MARKING METHOD AND SYSTEM**

(71) Applicant: Gamania Digital Entertainment Co., Ltd., 11494 Taipei City (TW)
(72) Inventor: WANG, Jack, Taipei City, 11494 (TW); LAI, Louis, Taipei City, 11494 (TW); WEI, Evan, Taipei City, 11494 (TW); CHANG, Mia, Taipei City, 11494 (TW); PAI, Jasper, Taipei City, 11494 (TW)
(74) Representative: karo IP
(86) International application number: PCT/CN2022/132133
(87) International publication number: WO 2024/103270

(57) **Abstract**

A method and system for certifying and labeling game multimedia data are disclosed. When a user plays a game application and selects a recording button, a recording application records the gameplay into a recording file, which the user may edit. The recording file may be in a video format, an audio format, an image format, or a graphics interchange format (GIF). The recording application embeds a verification code into the recording file, packages it as packet data, and transmits it to a media server for certifying and labeling.

## Description

### FIELD OF THE INVENTION

The present invention relates to the field of multimedia data certifying and labeling technology and, in particular, a method and system for certifying and labeling game multimedia data.

### BACKGROUND OF INVENTION

With the increasing number of people playing mobile games and the growing amount of time they spend engaged in gameplay, users often encounter highlight moments, stage completion events, interesting segments, or other scenes worth preserving or showcasing. However, such moments are often fleeting. Even if a user wishes to immediately record the gameplay using a screen recording application, it is impossible to retrieve the game footage that has already occurred.

To address the aforementioned issue, game publishers have adopted a method in which the game program periodically saves the user's gameplay state. However, this approach often fails to capture gameplay at the critical moments desired by the user. Moreover, modern games are highly complex, making it impractical-if not impossible-to store all possible game states. The required storage space would be enormous, far exceeding the storage capacity of most personal devices.

Another existing solution involves users installing third-party screen recording applications on their mobile devices. However, these applications typically record in a forward-time manner, meaning that to capture specific highlights during gameplay, users must either plan and prepare in advance or continuously record for extended periods. This method presents a high entry barrier and makes it difficult to verify whether the recorded short video has been artificially altered or falsified.

### SUMMARY OF THE INVENTION

In view of the foregoing, the present invention provides a method and system for certifying and labeling game multimedia data to address the issues in prior art. This invention allows users to retrieve highlight moments encountered during gameplay with a single action, without requiring prior preparation. The recorded packet data can incorporate user account information and game publisher details, enabling official certification to ensure the authenticity of the packet data content.

The present invention provides a method and system for certifying and labeling game multimedia data, wherein the game application must be integrated with a recording application. In one embodiment, the user operation process proceeds as follows: 1) The user selects the " recording button" within the game application. 2) If the user has not yet registered, a prompt will remind them that registration is required to enable the recording function. 3) The recording application generates and outputs a short video file along with relevant official certification data, including the user's latest game data (such as level, stage, map, and a unique code for the video). 4) The recording application prompts the user with an option: "would you like to open the video editing function for creative editing now?". 5) If the user selects "edit later", the system maintains the original gaming experience without interruption. 6) If the user selects "proceed to edit", the mobile device screen switches to the "video editing function". 7) Within the "video editing function", the following editing materials are provided for user customization or placement via drag-and-drop: a. Countdown timer sticker effects (3- or 5-second countdown effects). b. An option to enable or disable background audio in the video.
c. Game-specific emoji stickers corresponding to the recorded gameplay. d. Text editing functionality. e. Video fast-forwarding options. 8) Upon completing the post-editing process within the "video editing function", the user selects "save to short video library". The recorded video is then stored and can be accessed under the user's "game/passport/short video library" section.

The present invention enables replay recording, allowing users to retroactively capture gameplay footage with a single action, recording up to 15 seconds (not limited to 15 seconds). The recorded video can include the user's account information, data, and statistics, making it applicable for game achievement video recording scenarios. The captured footage can be shared or stored in the local photo album.

The present invention can be integrated with customer support reporting, automatically attaching a link to the recorded footage of the 15 seconds (not limited to 15 seconds) preceding the report submission. This functionality is applicable for debugging and testing within the game application.

The replay recording method of the present invention incorporates user account data and game data, enabling official certification. Certified short videos can be utilized to create stickers, advertisements, or be minted as non-fungible token (NFT) assets for sale, gifting, or trading.

The proposed method and system for certifying and labeling game multimedia data ensure that every highlight moment can be recorded without omission, eliminating the need for prior planning. Additionally, the invention allows game publishers to certify the authenticity of the recorded videos.

### BRIEF DESCRIPTION OF THE DRAWINGS

FIG. 1 is a schematic diagram of the system for certifying and labeling game multimedia data.
FIG. 2 is a schematic diagram of the recording button on the electronic device.
FIG. 3 is a schematic diagram the user information.
FIG. 4 is a schematic diagram of the recording method in the recording application.
FIG. 5 is a schematic diagram of the video editing function.
FIG. 6 is a schematic diagram of the certification label.
FIG. 7 is a flowchart of the method for certifying and labeling game multimedia data.
FIG. 8 is a flowchart of the method for certifying and labeling game multimedia data.
FIG. 9 is a flowchart of the method for certifying and labeling game multimedia data.
FIG. 10 is a schematic diagram of the integration of the method for certifying and labeling game multimedia data with the instant messaging chat group.

### DETAILED DESCRIPTION OF THE INVENTION

In the following description, for the purposes of explanation, numerous specific details are set forth in order to provide a thorough understanding of various exemplary embodiments. It is apparent, however, that various exemplary embodiments may be practiced without these specific details or with one or more equivalent arrangements.

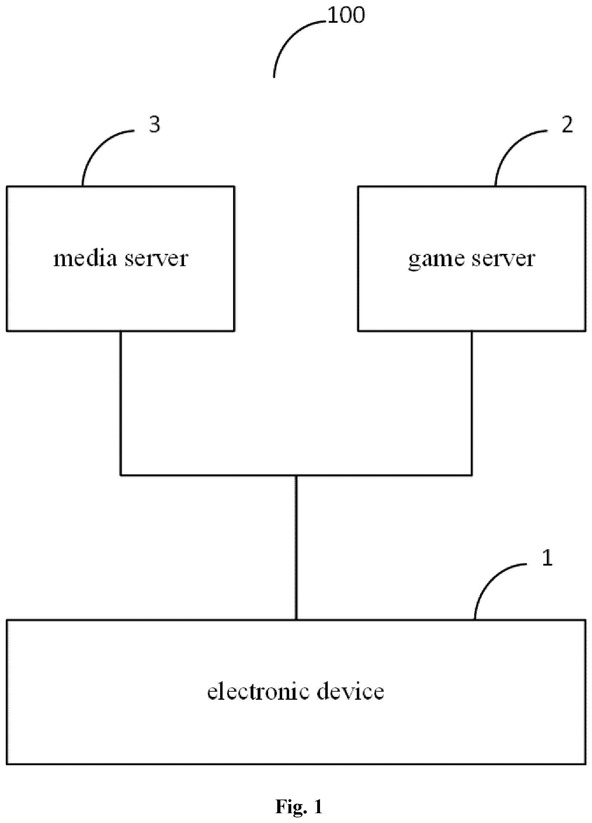

As shown in FIG. 1, a system for certifying and labeling game multimedia data (100) includes an electronic device (1), at least one game server (2), and a media server (3). the electronic device (1) includes at least one processor, a display screen (11), a memory cell, a game application, and a recording application. the game server (2) is connected to the electronic device (1) via the internet and stores game-related data. the media server (3) is also connected to both the electronic device (1) and the game server (2) via the internet.

The recording application obtains user data from the electronic device (1), obtains game progression data from the game application, and obtains official certification data from the media server (3).

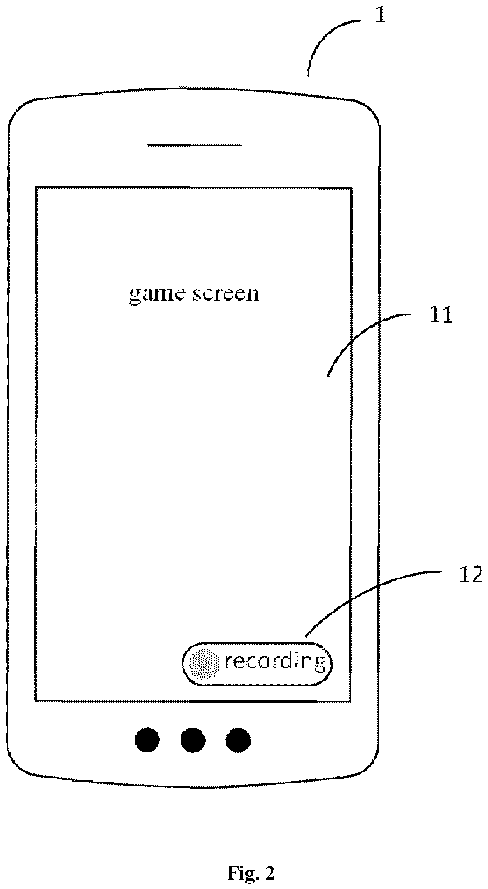

As shown in FIG. 2, the electronic device (1) executes the recording application, embedding a recording button (12) within the game application interface displayed on the display screen (11). The processor records continuous frames displayed on the display screen (11) for a preset duration, generating a recording file (20) with a timestamp and storing it in a temporary memory within the memory cell. As time progresses, the processor deletes the earliest timestamped frame data from the temporary memory while updating it with the most recent timestamped frame data.

Upon detecting a transmission command sent by the user selecting the recording button (12), the recording application extracts the recording file (20) from the temporary memory. The processor embeds a verification code into the recording file and stores it as packet data (30) in a general memory of the memory cell.

After storing the packet data (30), the recording application displays a certification transmission option on the display screen (11), prompting the user to confirm whether to proceed with certification. If the user chooses to proceed with certification, the recording application embeds the certification transmission option into the packet data (30) and sends it to the media server (3).

Upon receiving the packet data (30), the media server (3) uses the embedded verification code to connect to the game server (2) and retrieve the corresponding game-related data. The media server then compares the verification code with the game-related data to determine its validity. If the data is verified as correct, the media server generates a certification label (13). If the verification fails, a message is sent back to the electronic device (1) and displayed on the display screen (11) to inform the user.

In another embodiment of the present invention, when the user selects the recording button (12), the process includes embedding a verification code into the recording file (20), storing it as packet data (30), and directly transmitting it to the media server (3) without requiring the certification transmission option step.

Preferably, the verification code includes user data, game progression data, official certification data, and an editing record.

The user data includes the user's account associated with the media server (3), the account for the game application, and an account on a platform (40) (e.g., a communication platform). The game progression data includes the user's level, the stage being played, the map, game progress, and other related gameplay records at the time of recording the recording file (20). The official certification data includes game server permissions, an anti-counterfeiting code, and a unique video code.

In another embodiment, the recording application can obtain the official certification data directly from the game server (2) without requiring access through the media server (3).

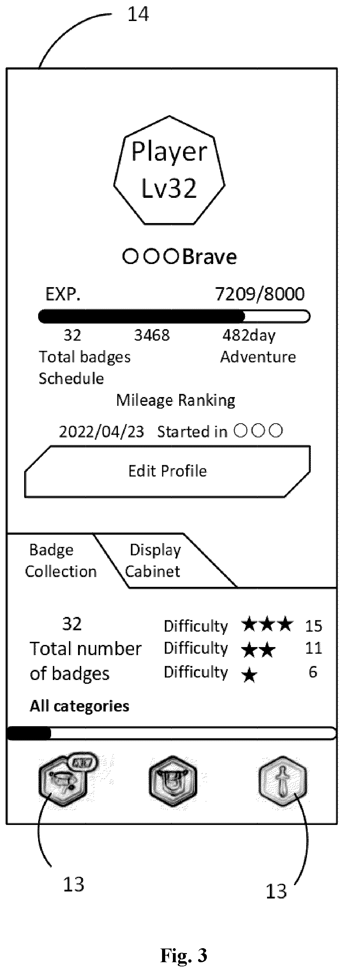

In one embodiment, the system for certifying and labeling game multimedia data (100) further includes a communication server (not shown in the figures). The communication server is connected to the electronic device (1) and/or the media server (3). The media server (3) marks the certification label (13) on a user information (14) of a platform (40) within the communication server, as shown in FIG. 3.

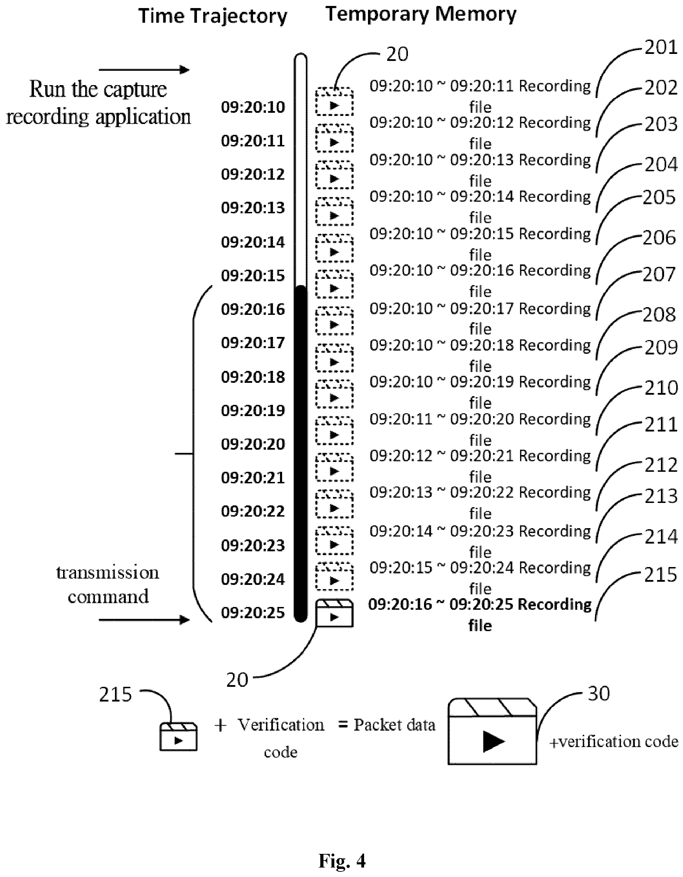

As shown in FIG. 4, in one embodiment, the electronic device (1) executes the recording application at 09:20:10, with the recording duration set to 10 seconds. If the recording application continues running for a period shorter than the set duration (before 09:20:20), it records the recording file (20) on a per-second basis and stores it in the temporary memory (as illustrated in the sequence from recording file 201 to 210). When the recording application runs beyond the preset duration (after 09:20:19), the temporary memory automatically deletes the earliest data to make room for the latest data (as illustrated in recording files 211 to 215). When the recording application detects the transmission command at 09:20:25, the processor extracts the recording file (20) from the temporary memory (covering the period from 09:20:16 to 09:20:25, recording file 215). The processor then embeds a verification code into the recording file and stores it as packet data (30) in the general memory.

In another embodiment, when the recording application receives the transmission command, it begins recording the continuous frames displayed on the display screen (11), storing them as the recording file (20) in the temporary memory. When the recording reaches the preset duration, the processor embeds a verification code into the recording file (20) and packages it into packet data (30), storing it in the general memory.

Preferably, the preset recording duration of the electronic device (1) can be determined based on the capacity of the temporary memory, user-defined settings, or default settings of the recording application.

The recording file (20) comprises video formats, audio formats, single or multiple image formats, graphics interchange format (GIF), and game program files.

The packet data (30) comprises the recording file (20) and the verification code.

Preferably, the media server (3) embeds the certification label (13) into the continuous frames of the packet data (30) and stores it in a media database within the media server (3), making it available for multiple users to view.

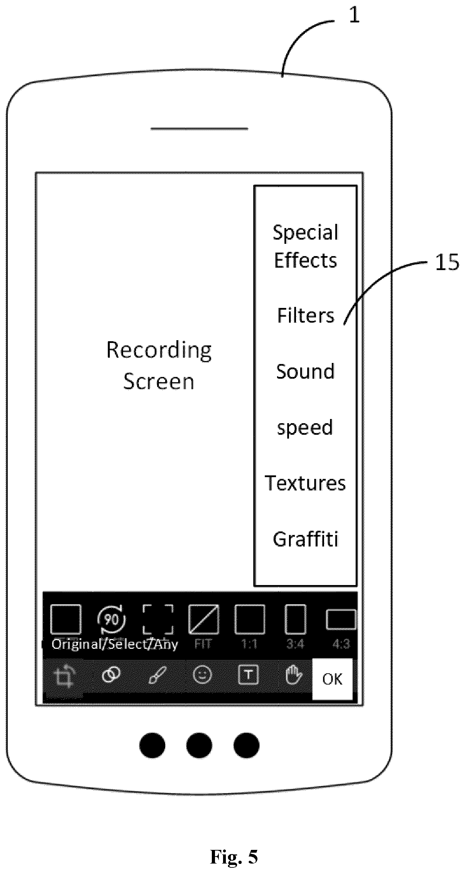

Additionally, the recording application further includes a video editing function (15), as shown in fig. 5. this video editing function (15) allows users to edit the packet data (30) and embed the editing record into the verification code.

The video editing function (15) further includes features such as countdown timer stickers, 3- or 5-second countdown effects, enabling or disabling background audio, emoji stickers, text editing, video fast-forwarding, and filters, among others. However, these features are not limited to the aforementioned functionalities.

Preferably, the recording application further includes a certification label menu, allowing the user to select a label item (16) from the menu based on the official certifying item of the packet data (30). Once the user selects a label item (16), the recording application embeds the label item (16) into the verification code.

The certification label menu includes label items (16) such as highlight moments, funny moments, speedrunnings, top rankings, taunts, strongest performances, and various other categories listed in table 1, among others, but is not limited to these.

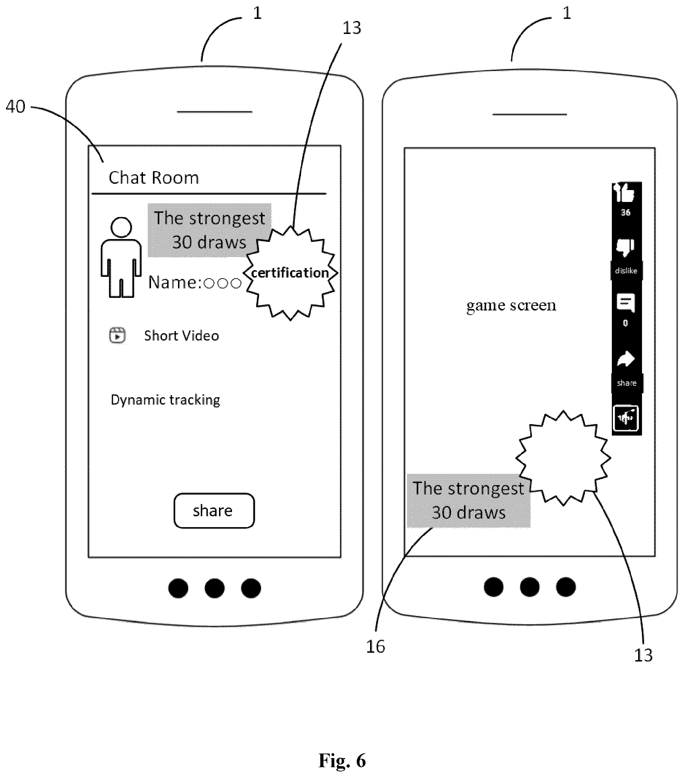

Preferably, the media server (3) obtains the platform (40) permissions using the platform account contained in the verification code. It then uploads the packet data (30), which includes the embedded certification label (13), to the platform (40) and/or embeds the certification label (13) within the user information of the platform (40), as shown in FIG. 6.

In the method of the present invention, the label items (16) correspond to game-related data stored on the game server (2), which is periodically updated as the game progresses.

Furthermore, the game-related data includes the anti-counterfeit code and the unique video code.

The game-related data further includes, but is not limited to, the categories listed in Table 1 below:

**Table 1**

| Item | Level | Progress | Total Score | Completion Record | Rare Items | Various Best Rankings... | |
|---|---|---|---|---|---|---|---|
| Record ranking | User A | User A | User A | Stage 1 -1m45s | Treasure a*1 | 30 Draws | ... |
| | User B | User B | User B | Stage 2 -2m11s | Treasure b*1 | Defense | ... |
| | User C | User E | User E | Stage 3 -2m39s | Treasure c*1 | Attack | ... |
| | User D | User D | User D | Stage 4 -2m45s | Treasure d*1 | Outfit | ... |
| | User E | User C | User C | Stage 5 -3m08s | Treasure e*1 | Cute | ... |
| | User F | User H | User H | Stage 6 -3m22s | Treasure f* 1 | Popularity | ... |
| | User G | User J | User J | Stage 7 -3m11s | Treasure g*2 | Weapon | ... |
| | User H | User I | User C | Stage 8 -3m55s | Treasure h*1 | most embarrassing | ... |
| | User I | User K | User I | Stage 9 -4m10s | Treasure i*3 | Pet | ... |
| | •• | •• | •• | •• | •• | •• | •• |

The method of the present invention applies to an electronic device (1), which includes but is not limited to mobile phones, computers, handheld devices, gaming consoles, and tablets.

In another embodiment, the media server (3) and the recording application complete the following tasks within the official game application (APP): embedding the recording button (12) into the game screen protocol, synchronizing the game application's anti-counterfeiting code and unique video code, and updating the game application's data (such as level completion, game stages, and map entry records).

In one embodiment, after decrypting the packet data (30), the media database enables multiple users to access the media server (3) via the platform (40) to view and/or share the recorded content.

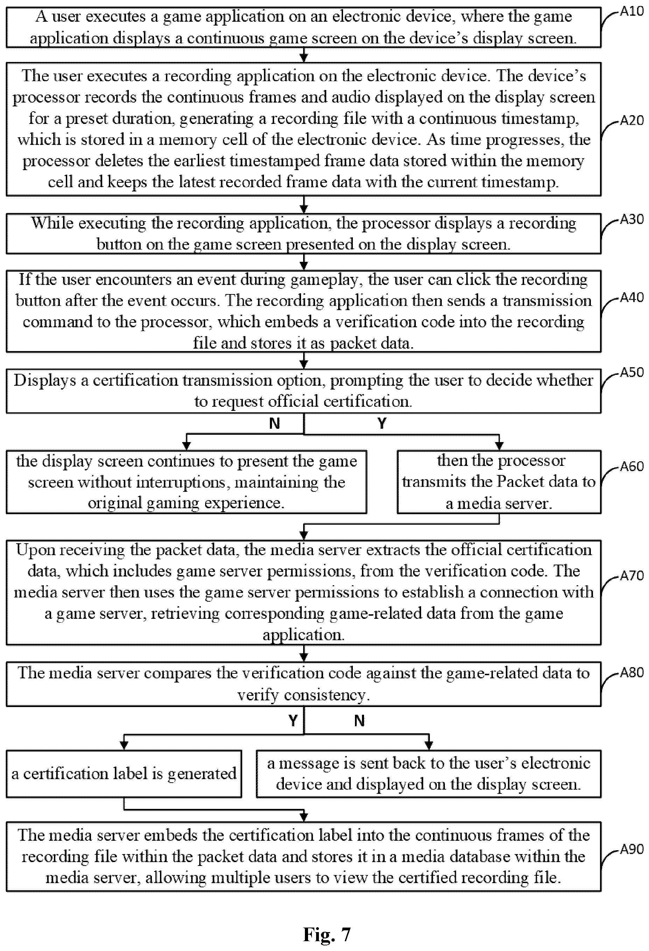

In one embodiment, the game multimedia data certifying and labeling method of the present invention, as shown in FIG. 7, comprises the following steps:
A10. A user executes a game application on an electronic device (1), where the game application displays a continuous game screen on the device's display screen (11).
A20. The user executes a recording application on the electronic device (1). The device's processor records the continuous frames and audio displayed on the display screen (11) for a preset duration, generating a recording file (20) with a continuous timestamp, which is stored in a memory cell of the electronic device (1). As time progresses, the processor deletes the earliest timestamped frame data stored within the memory cell and keeps the latest recorded frame data with the current timestamp.
A30. While executing the recording application, the processor displays a recording button (12) on the game screen presented on the display screen (11).
A40. If the user encounters an event during gameplay, the user can click the recording button (12) after the event occurs. The recording application then sends a transmission command to the processor, which embeds a verification code into the recording file (20) and stores it as packet data (30).
A50. Following the previous step, the recording application displays a certification transmission option on the display screen (11), prompting the user to decide whether to request official certification for the packet data (30). If the user chooses not to proceed with certification, the display screen (11) continues to present the game screen without interruptions, maintaining the original gaming experience.
A60. If the user chooses to proceed with certification, the recording application detects a certification transmission command, then the processor transmits the packet data (30) to a media server (3).
A70. Upon receiving the packet data (30), the media server (3) extracts the official certification data, which includes game server permissions, from the verification code. The media server (3) then uses the game server permissions to establish a connection with a game server (2), retrieving corresponding game-related data from the game application.
A80. The media server (3) compares the anti-counterfeiting code and the unique video code within the verification code against the game-related data to verify consistency. If the data match, a certification label (13) is generated.
A90. The media server (3) embeds the certification label (13) into the continuous frames of the recording file (20) within the packet data (30) and stores it in a media database within the media server (3), allowing multiple users to view the certified recording file (20).

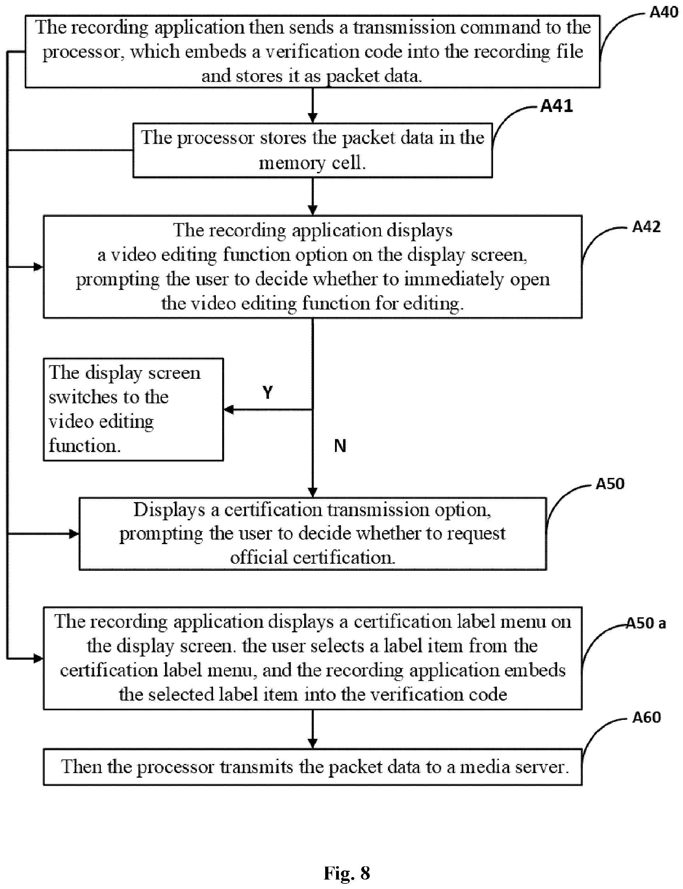

In the above description, step A40 is followed by: A41. the processor stores the packet data (30) in the memory cell, continuing to step A50, as shown in FIG. 8.

Additionally, step A40 or A41 is followed by: A42. the recording application displays a video editing function (15) option on the display screen (11), prompting the user to decide whether to immediately open the video editing function (15) for editing. If the user declines, the original gaming experience remains unchanged. If the user agrees, the display screen (11) switches to the video editing function (15), allowing the user to edit the packet data (30). Once editing is completed, the edited packet data (30) is saved, continuing to step A50.

Furthermore, step A50 is replaced by: A50a. The recording application displays a certification label menu on the display screen (11). The user selects a label item (16) from the certification label menu, and the recording application embeds the selected label item (16) into the verification code, continuing to step A60.

In another implementation, in step A40, the processor directly transmits the packet data (30) to a media server (3), continuing to step A70.

In step A80, the media server (3) compares the anti-counterfeiting code and the unique video code within the verification code with the game-related data. If they do not match, a message is sent back to the user's electronic device (1) and displayed on the display screen (11).

In the above description, in step A80, if the media server (3) determines that the anti-counterfeiting code and the unique video code within the verification code match the game-related data, the server directly decrypts the packet data (30) and stores it in a media database within the media server (3), making it available for multiple users to view.

In another embodiment of the present invention, before executing the aforementioned steps, the game application provided by the official and the recording application establish a prior protocol to embed the recording button (12) into the game screen. Step A10 may further be replaced by step A10a, in which a user executes a game application on an electronic device (1), and the game application displays a continuous game screen on the device's display screen (11), where the recording button (12) is embedded within the currently displayed game application screen. Step A10a then proceeds directly to step A20, omitting step A30.

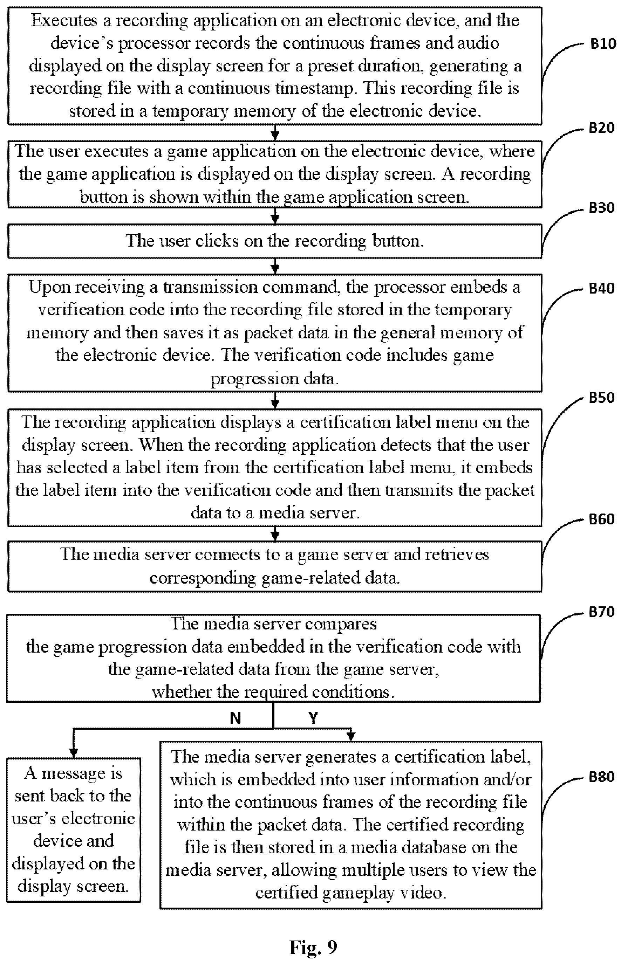

In another embodiment of the present invention, as shown in FIG. 9, a game multimedia data certifying and labeling method is provided to certify speedrunning gameplay videos. The method includes the following steps:
B10. A user executes a recording application on an electronic device (1), and the device's processor records the continuous frames and audio displayed on the display screen (11) for a preset duration (e.g., 15 seconds), generating a recording file (20) with a continuous timestamp. This recording file (20) is stored in a temporary memory of the electronic device (1). As time progresses, the processor deletes the earliest timestamped frame data within the temporary memory, keeping the latest recorded frame data with the current timestamp, ensuring that the recording file (20) maintains a fixed duration (e.g., 15 seconds).
B20. The user executes a game application on the electronic device (1), where the game application is displayed on the display screen (11). A recording button (12) is shown within the game application screen.
B30. While playing the game, the user completes stage 1 in 1 minute and 40 seconds. Immediately after completing the stage, the user clicks on the recording button (12).
B40. Upon receiving a transmission command, the processor embeds a verification code into the recording file (20) stored in the temporary memory and then saves it as packet data (30) in the general memory of the electronic device (1). The verification code includes game progression data.
B50. Following the previous step, the recording application displays a certification label menu on the display screen (11). When the recording application detects that the user has selected a label item (16) (e.g., " speedrunning") from the certification label menu, it embeds the label item (16) into the verification code and then transmits the packet data (30) to a media server (3).
B60. The media server (3) connects to a game server (2) and retrieves corresponding game-related data.
B70. The media server (3) compares the game progression data embedded in the verification code with the game-related data from the game server (2), specifically checking whether the stage 1 completion record (e.g., from table 1, " completion record: stage 1 - 1m45s") meets the required conditions.
B80. If the conditions are met, the media server (3) generates a certification label (13) (e.g., "speedrunning"), which is embedded into user information (14) and/or into the continuous frames of the recording file (20) within the packet data (30). The certified recording file (20) is then stored in a media database on the media server (3), allowing multiple users to view the certified gameplay video.

In the aforementioned step B70, the media server (3) compares the game progression data embedded in the verification code with the game-related data to determine whether it meets the required conditions. If the conditions are not met, the media server (3) transmits a message to the display screen (11) of the user's electronic device (1).

In another embodiment of the present invention, steps B10 and B20 in the previous embodiment are replaced by B10a and B20a, as follows:
B10a. A user executes a game application on an electronic device (1), where the game application is displayed on the display screen (11) of the electronic device (1).
B20a. The user then executes a recording application on the electronic device (1), which displays a recording button (12) within the game application screen. The processor of the electronic device (1) records the continuous frames displayed on the display screen (11) for a preset duration (e.g., 15 seconds), generating a recording file (20) with a continuous timestamp. This recording file (20) is stored in the temporary memory of the electronic device (1). As time progresses, the processor deletes the earliest timestamped frame data from the temporary memory while storing the latest recorded frame data with the current timestamp, ensuring that the recording file (20) maintains a fixed duration (e.g., 15 seconds). This step then continues with step b30 from the previous embodiment.

The present invention also provides a system for certifying and labeling game multimedia data, which comprises an electronic device (1), at least one game server (2), and a media server (3). The electronic device (1) includes at least one processor, a display screen (11), a memory cell, a game application, a built-in screen recording application, and a recording application. The game server (2) is connected to the electronic device (1) via the internet and comprises game-related data. The media server (3) is also connected to the electronic device (1) and the game server (2) via the internet. When the electronic device (1) activates the built-in screen recording application, the application records the continuous frames displayed on the display screen (11) and stores them as a recording file (20) in a temporary memory of the memory cell. As time progresses, the temporary memory deletes the earliest recorded frame data while storing the most recent frame data, maintaining a continuous recording. The game application is integrated with the recording application. When the electronic device (1) runs the game application, a recording button (12) is embedded within the game application screen displayed on the display screen (11).

In one embodiment of the present invention, the user must first register with the media server (3). When the user executes the recording application on the electronic device (1), the recording application verifies the user's identity. If the user has not yet registered, the recording application redirects to the registration interface of the media server (3).

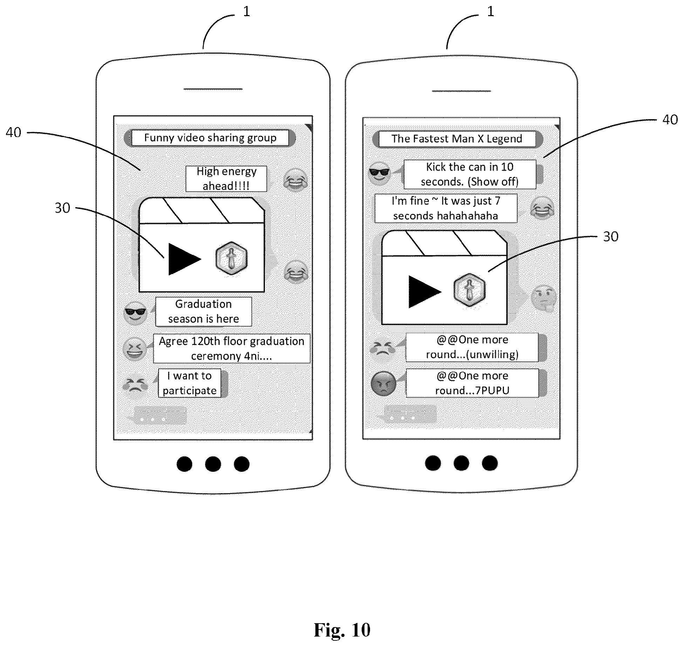

In one embodiment of the present invention, as shown in FIG. 10, a retrospective recording certification method is provided. When multiple users compete in the same game application while utilizing the present invention, the method includes the following steps:
C10. The official publishers of the game application and the recording application establish an integration protocol between the game application and the recording application.
C20. Each user runs the same game application on their respective electronic device (1). The game application is displayed on the display screen (11) of the electronic device (1), and a recording button (12) is embedded within the game application screen.
C30. While executing the game application, the recording application runs simultaneously. The processor of the electronic device (1) records the continuous frames displayed on the display screen (11) for a preset duration (e.g., 7 seconds), generating a recording file (20) with a continuous timestamp. The recording file (20) is stored in a temporary memory of the electronic device (1). As time progresses, the processor deletes the earliest timestamped frame data in the temporary memory while preserving the latest recorded frame data corresponding to the current timestamp, ensuring that the recording file (20) maintains a fixed duration (e.g., 7 seconds).
C40. When the competition ends, each user clicks the recording button (12) on their respective electronic device (1).
C50. Upon receiving a transmission command, the processor embeds a verification code into the recording file (20) stored in the temporary memory and then saves it as packet data (30) in the general memory of the electronic device (1).
C60. The recording application displays a video editing function (15) option on the display screen (11), prompting the user to decide whether to open the video editing function (15) for editing. If the user chooses not to edit, proceed to step C70; if the user chooses to edit, the display screen (11) switches to the video editing function (15), allowing users to edit their respective packet data (30) individually before saving it again as packet data (30).
C70. The recording application displays a transmission certification option on the display screen (11), prompting the user to decide whether to request official certification for the packet data (30). If the user declines, the display screen (11) continues displaying the game screen, maintaining the original gaming experience. If the user agrees, the processor transmits the packet data (30) to a media server (3).
C80. The media server (3) receives the packet data (30), extracts the official certification data, which includes game server permissions, from the verification code. The media server (3) then uses the game server permissions to establish a connection with a game server (2), retrieving corresponding game-related data from the game application.
C90. The media server (3) compares the anti-counterfeiting code and the unique video code within the verification code against the game-related data to verify consistency. If they match, the media server (3) generates a certification label (13).
C100. The media server (3) embeds the certification label (13) into the continuous frames of the recording file (20) within the packet data (30) and stores it in a media database of the media server (3).
C110. Each user accesses the media database of the media server (3) via their respective electronic device (1) to retrieve the packet data (30) and upload it to a platform (40) for sharing.

An embodiment of the present invention provides a method for certifying and labeling game multimedia data, which is applied to a media server. The method includes the following steps. The media server receives packet data transmitted from an electronic device, wherein the packet data includes a recording file and a verification code. The media server establishes a connection with a game server to retrieve corresponding game-related data. The media server then compares the verification code with the retrieved game-related data to determine its validity. If the verification is successful, the media server generates a certification label. The media server then either marks the certification label on the user information of a platform and/or embeds the certification label into the continuous frames of the recording file before storing it in a media database. This allows multiple users to access and view the certified recording file.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

In the above example embodiment, the memory cell may be a read-only memory (ROM), or readable and writable, such as a hard disk or a flash memory. The internal memory cell may be a random-access memory (RAM). The internal memory cell may be physically integrated with the processor, integrated into the computer storage device or separate units.

The processor is a control center of the above-described device (the device is the server or the client terminal) and provides processing for executing instructions, performing an interrupt operation, providing a timing function, and a plurality of other functions. Optionally, the processor includes one or more central processing units (CPUs). The above devices include one or more processors. The processor may be a single-core (single-CPU) processor or a multi-core (multi-CPU) processor. Unless otherwise stated, the described components described for performing a task, such as a processor or memory may be implemented as a generic component that is temporarily used to perform the task at a given time or a particular component for the purpose of specifically performing the task. As used herein, the term processor refers to one or more apparatuses, circuits, and/or processing cores for processing data such as computer-readable instructions.

The computer-readable instructions executable by the CPU of the processor may be stored in the internal memory cell or the computer storage device. Optionally, the computer-readable instructions stored in the computer storage device may be copied into the internal memory for execution by the CPU of the processor. The processor may execute at least one kernel (e.g., LINUX^{™}, UNIX^{™}, WINDOWS^{™}, ANDROID^{™}, IOS^{™}), which is known to control the use of other programs or processes, control the communication with the peripheral devices, and control the use of computer device resources.

## Claims

1. A method for certifying and labeling game multimedia data, the method comprising:
executing, by a processor of an electronic device, a game application and displaying a game screen on a display screen of the electronic device;
executing, by the processor, a recording application, wherein the recording application stores a continuous frames and an audio presented on the display screen as a recording file in a memory cell of the electronic device;
receiving, by the recording application, a transmission command, wherein the processor extracts the recording file from the memory cell, embeds a verification code into the recording file, and packages the recording file into a packet data for transmission to a media server;
connecting, by the media server, to a game server to obtain a game-related data; and
comparing, by the media server, the verification code with the game-related data, and in response to determining that the verification code is valid, storing the packet data in a media database of the media server.

2. The method for certifying and labeling game multimedia data according to claim 1, wherein the recording file comprises video formats, audio formats, image formats, and Graphics Interchange Formats (GIF).

3. The method for certifying and labeling game multimedia data according to claim 1, wherein the memory cell stores the continuous frames displayed on the display screen based on a preset duration and a timestamp, and as time progresses, the processor deletes the earliest timestamped a frame data corresponding to the preset duration while storing the latest timestamped the frame data.

4. The method for certifying and labeling game multimedia data according to claim 1, wherein when executing the recording application, the processor displays a recording button within the game screen presented on the display screen.

5. The method for certifying and labeling game multimedia data according to claim 1, wherein the media server marks a certification label on a user information of a platform and/or embeds the certification label into the continuous frames of the recording file.

6. The method for certifying and labeling game multimedia data according to claim 1, wherein the transmission command further includes a certification label menu.

7. The method for certifying and labeling game multimedia data according to claim 1, wherein the recording application further includes a video editing function.

8. The method for certifying and labeling game multimedia data according to claim 1, wherein the verification code comprises a user data, a game progression data, an official certification data, and an editing record.

9. The method for certifying and labeling game multimedia data according to claim 8, wherein the official certification data comprises a game server permissions, an anti-counterfeiting code, and a unique video code.

10. A method for certifying and labeling game multimedia data, comprising:
executing, by a processor of an electronic device, a recording application to store a continuous frames and an audio presented on a display screen as a recording file in a memory cell of the electronic device;
executing, by the processor, a game application and presenting a game screen on the display screen;
receiving, by the recording application, a transmission command, wherein the processor retrieves the recording file from the memory cell, embeds a verification code into the recording file, and packages the recording file into a packet data for transmission to a media server;
establishing, by the media server, a connection with a game server to obtain a game-related data; and
verifying, by the media server, whether the verification code matches the game-related data, and if so, storing the packet data in a media database of the media server.

11. The method for certifying and labeling game multimedia data according to claim 10, wherein the media server marks a certification label on a user information of a platform and/or embeds the certification label into the continuous frames of the recording file.

12. The method for certifying and labeling game multimedia data according to claim 10, wherein the recording file comprises video formats, audio formats, image formats, and graphics interchange formats (GIF).

13. A method for certifying and labeling game multimedia data, applied to a media server, comprising:
receiving, by the media server, a packet data transmitted from an electronic device, wherein the packet data includes a recording file and a verification code;
establishing, by the media server, a connection with a game server to retrieve a game-related data; and
verifying, by the media server, whether the verification code matches the game-related data, and if so, storing the packet data in a media database of the media server.

14. The method for certifying and labeling game multimedia data according to claim 13, wherein the media server marks a certification label on a user information of a platform and/or embeds the certification label into the continuous frames of the recording file.

15. A system for certifying and labeling game multimedia data, comprising:
an electronic device including at least one processor, a display screen, a memory cell, a game application, and a recording application;
at least one game server connected to the electronic device via an internet, wherein the game server includes a game-related data; and
a media server connected to the electronic device and the game server via the internet;
wherein the processor executes the game application to present a game screen on the display screen;
wherein the processor executes the recording application to store a continuous frames and an audio presented on the display screen as a recording file in the memory cell;
wherein the recording application receives a transmission command, and the processor extracts the recording file from the memory cell, embeds a verification code into it, and stores it as a packet data for transmission to the media server; and
wherein the media server connects to the game server to retrieve the game-related data,
verifies whether the verification code matches the game-related data, and, if so, stores the packet data in a media database of the media server.

16. The system for certifying and labeling game multimedia data according to claim 15, wherein the media server marks a certification label on a user information of a platform and/or embeds the certification label into the continuous frames of the recording file.

17. The system for certifying and labeling game multimedia data according to claim 15, wherein the recording application further includes a video editing function.
